# EUROPEAN PATENT SPECIFICATION

(11) **EP 2 640 617 B1**
(45) Date of publication and mention of the grant of the patent: **01.03.2017**
(21) Application number: 11793876.1
(22) Date of filing: 10.11.2011
(51) Int. Cl.: B60T 8/36

(54) **BRAKING LIQUID PRESSURE CONTROL DEVICE**
VORRICHTUNG ZUR STEUERUNG EINES BREMSFLÜSSIGKEITSDRUCKS
DISPOSITIF DE RÉGULATION DE PRESSION DE LIQUIDE DE FREIN

(30) Priority: 15.11.2010 JP 2010254803
(43) Date of publication of application: 25.09.2013
(73) Proprietor: Robert Bosch GmbH, 70469 Stuttgart (DE)
(72) Inventor: SAKAMOTO, Takanori, Yokohama-shi Kanagawa 224-8501 (JP)
(74) Representative: DREISS Patentanwälte PartG mbB
(86) International application number: PCT/JP2011/076465
(87) International publication number: WO 2012/067168

(56) References cited:
- EP-A1- 2 216 219
- WO-A1-2009/081738
- DE-A1-102004 001 508
- JP-A- 10 044 975
- JP-A- 2000 211 488
- JP-A- 2010 274 904

## Description

### Technical Field

The present invention relates to a braking liquid pressure control device provided for mounting a hydraulic unit which performs an antilock brake control on a vehicle body.

### Background Art

Conventionally, there has been known a braking liquid pressure control device which includes a hydraulic unit which controls a liquid pressure of a braking liquid supplied to a braking part using a hydraulic circuit thus performing an antilock brake control and is mounted on a vehicle body. This type of braking liquid pressure control device includes support parts for supporting the hydraulic unit using screws or the like at three or more places, wherein the hydraulic unit is mounted on a bracket, and is mounted on a vehicle body through a large number of bolt holes formed in a lower part of the bracket (see PTL 1, for example).

There is observed a tendency where a space for mounting the braking liquid pressure control device on the vehicle body is limited. Particularly, in a motorcycle vehicle, a space for mounting a hydraulic unit is extremely small in many cases. Accordingly, in the above-mentioned constitution, it is difficult to ensure a space for performing a mounting operation of the hydraulic unit and hence, it is desirable to decrease the number of places where the hydraulic unit is supported on the bracket and the number of places where the bracket is fixed to the vehicle body as much as possible.

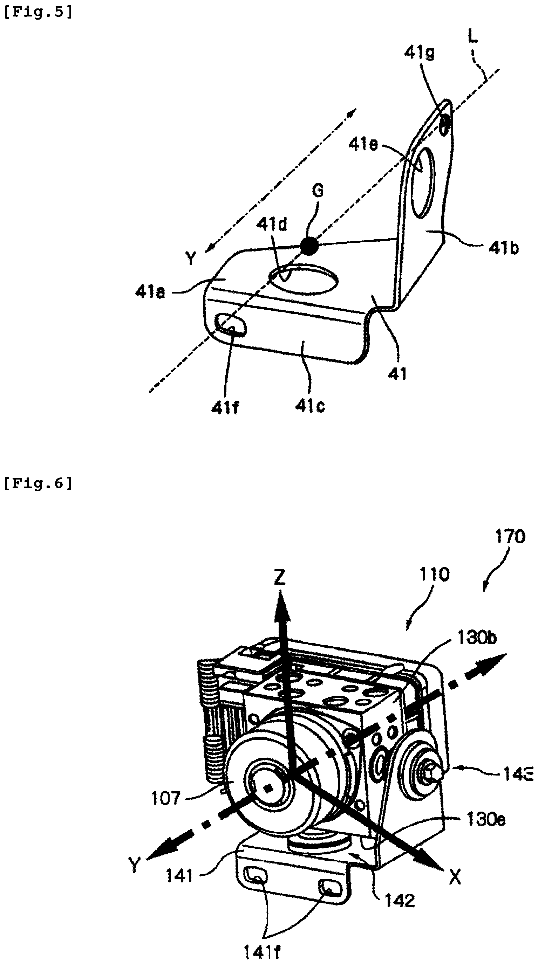

For this end, as shown in Fig. 6, according to prior art that was available to the public on the date of priority of present application, there has been proposed a braking liquid pressure control device 170 where a lower surface 130e of a hydraulic unit 110 and one side surface 130b of the hydraulic unit 110 are respectively supported on one support part 142, 143, and a bracket 141 is fixed to a vehicle body by means of a pair of fixing parts 141f provided directly below a motor 107 of the hydraulic unit 110. This braking liquid pressure control device comprises:
a first support part which supports a second surface formed approximately perpendicular to the first surface of the hydraulic unit;
a second support part which supports a third surface formed approximately perpendicular to the first surface and the second surface of the hydraulic unit respectively, and
a bracket on which the first support part and the second support part are mounted, wherein
the bracket includes a first plate part on which the first support part is mounted, a second plate part which is formed approximately perpendicular to the first plate part and a third plate part which is formed by bending with respect to the first plate part and has a first fixing part for fixing the bracket to the vehicle body.

### Citation List

### Patent Literature

PTL 1: JP-A-2002-370635 (published between priority and filing date of present application).

### Summary of Invention

### Technical Problem

However, in such a braking liquid pressure control device, the bracket and the vehicle-body-side fixing part are fixed to each other in a contact state on a plane
perpendicular to the axial direction of the motor. In such a fixing method, there is observed a tendency where vibrations of the motor in the axial direction is increased thus giving rise to a possibility that mounting parts such as mounting rubber and the bracket are adversely affected due to an impact or deterioration.

It is an object of the present invention to
provide a braking liquid pressure control device which can overcome the drawbacks which the above-mentioned conventional technique has , can decrease the number of places where a hydraulic unit is supported on a bracket and, at the same time can suppress undesired vibrations.

The present invention provides a braking liquid pressure control device which includes a hydraulic unit where a motor is mounted on a first surface of the hydraulic unit and an antilock brake control is performed by controlling a liquid pressure of a braking liquid supplied to a braking part, the braking liquid pressure control device being mounted on a vehicle body, wherein the braking liquid pressure control device includes: a first support part which supports a second surface formed approximately perpendicular to the first surface of the hydraulic unit; a second support part which supports a third surface formed approximately perpendicular to the first surface and the second surface of the hydraulic unit respectively, and a bracket on which the first support part and the second support part are mounted, wherein the bracket includes a first plate part on which the first support part is mounted, a second plate part which is formed approximately perpendicular to the first plate part and has a first fixing part for fixing the bracket to the vehicle body and on which the second support part is mounted, and a third plate part which is formed by bending with respect to the first plate part and has a second fixing part for fixing the bracket to the vehicle body, and the first fixing part, the second fixing part and the center of gravity of the hydraulic unit are positioned approximately on one straight line.

In this case, the first fixing part may be positioned more away from the third plate part than the second support part. The second fixing part may be positioned more away from the second plate part than the first support part. At least one of the first fixing part and the second fixing part may be a through hole. The third plate part may be formed by bending approximately perpendicular to the first plate part. The first support part may support the hydraulic unit at a position where a line which passes the center of gravity of the hydraulic unit and the second surface become approximately perpendicular to each other in a state where the hydraulic unit is mounted on the vehicle body. The first support part may support the hydraulic unit in the vicinity of an area directly below the center of gravity of the hydraulic unit in a state where the hydraulic unit is mounted on the vehicle body. The second support part may support the hydraulic unit in the vicinity of an area on a horizontal line which passes the center of gravity of the hydraulic unit in a state where the hydraulic unit is mounted on the vehicle body. Advantageous Effect of Invention

According to the present invention, the number of places where the hydraulic unit is supported on the bracket can be decreased and, at the same time, undesired vibrations can be suppressed.

### Brief Description of Drawings

[Fig. 1] Fig. 1 is a circuit diagram showing a brake-use hydraulic circuit according to an embodiment of the present invention.
[Fig. 2] Fig. 2 is an exploded perspective view showing the constitution of a hydraulic unit.
[Fig. 3] Fig. 3 is a perspective view showing a braking liquid pressure control device.
[Fig. 4] Fig. 4 is an exploded perspective view showing the braking liquid pressure control device.
[Fig. 5] Fig. 5 is a perspective view showing a bracket.
[Fig. 6] Fig. 6 is a perspective view showing a braking liquid pressure control device according to a prior art. Description of Embodiments

Hereinafter, a preferred embodiment of the present invention is explained in conjunction with drawings.

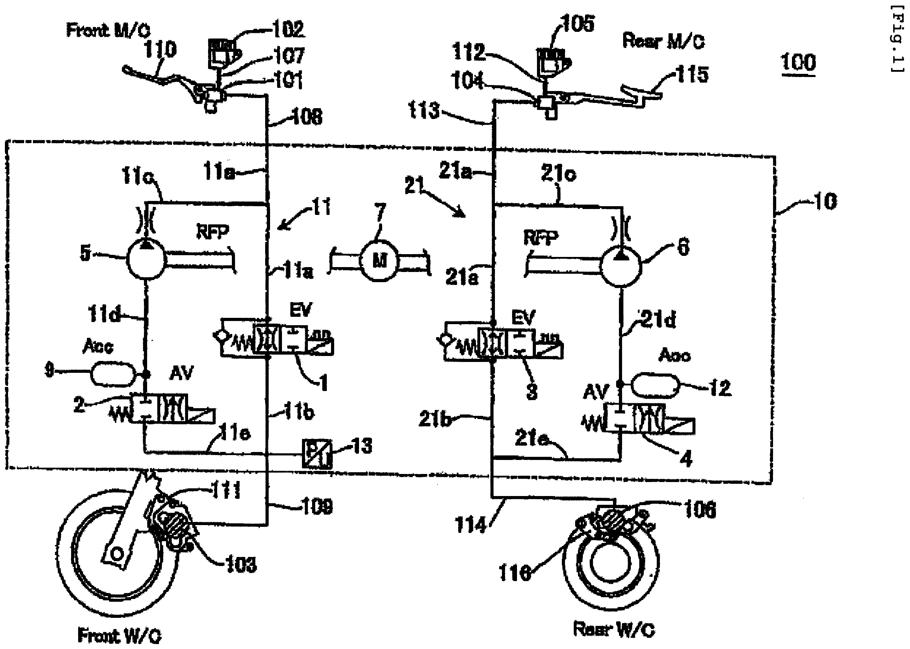

Fig. 1 is a circuit diagram showing a brake-use hydraulic circuit according to this embodiment. Here, in the explanation made heretofore and hereinafter, an upper side and a lower side respectively indicate an upper side of a vehicle and a lower side of the vehicle.

A brake-use hydraulic circuit 100 shown in Fig. 1 is a hydraulic circuit mounted on a motorcycle, for example, and is used as a hydraulic circuit for a well-known anti-lock brake control. Here, the anti-lock brake control (so-called ABS control) means a control which suppresses a wheel from being brought into a locked state by intermittently decreasing a braking liquid pressure at the time of applying braking to a vehicle, for example. Here, the operation principle of the anti-lock brake control, a basic control technique and the like of the anti-lock brake control are already known to those who are skilled in the art and hence, the detailed explanation of these matters is omitted here.

The brake-use hydraulic circuit 100 includes a front-wheel-use master cylinder (Front M/C) 101, a front-wheel-use reservoir tank 102 and a front-wheel-use wheel cylinder (Front W/C) 103 for a front-wheel-use disc brake device (braking part) 111 which generates a braking force with respect to a front wheel, a rear-wheel-use master cylinder (Rear M/C) 104, a rear-wheel-use reservoir tank 105 and a rear-wheel-use wheel cylinder (Rear W/C) 106 for a rear-wheel-use disc brake device (braking part) 116 which generates a braking force with respect to a rear wheel, and a hydraulic unit 10.

The hydraulic unit 10 is arranged between the front-wheel-use and rear-wheel-use master cylinders 101, 104 and the front-wheel-use and rear-wheel-use wheel cylinders 103, 106. Further, the hydraulic unit 10 performs the anti-lock brake control by controlling a pressure of a braking liquid which is supplied from the front-wheel-use master cylinder 101 to the front-wheel-use wheel cylinder 103 and/or by controlling a pressure of a braking liquid which is supplied from the rear-wheel-use master cylinder 104 to the rear-wheel-use wheel cylinder 106.

The front-wheel-use reservoir tank 102 is connected to the front-wheel-use master cylinder 101 through a first pipe 107. Further, the front-wheel-use wheel cylinder 103 is connected to the front-wheel-use master cylinder 101 through a second pipe 108, the hydraulic unit 10 and a third pipe 109.

For example, when the front-wheel-use master cylinder 101 is driven by a handle lever 110 of the vehicle, the front-wheel-use master cylinder 101 generates a braking liquid pressure applied to the front-wheel-use wheel cylinder 103 through the hydraulic unit 10. The front-wheel-use wheel cylinder 103 drives the front-wheel-use disc brake device 111 in response to the supplied braking liquid pressure thus applying braking to the front wheel.

The rear-wheel-use reservoir tank 105 is connected to the rear-wheel-use master cylinder 104 through a fourth pipe 112. The rear-wheel-use wheel cylinder 106 is connected to the rear-wheel-use master cylinder 104 through a fifth pipe 113, the hydraulic unit 10 and a sixth pipe 114.

For example, when the rear-wheel-use master cylinder 104 is driven by a foot pedal 115 of the vehicle, the rear-wheel-use master cylinder 104 generates a braking liquid pressure applied to the rear-wheel-use wheel cylinder 106 through the hydraulic unit 10. Further, the rear-wheel-use wheel cylinder 106 drives the rear-wheel-use disc brake device 116 in response to the supplied braking liquid pressure thus applying braking to the rear wheel.

Next, the hydraulic unit 10 according to this embodiment is explained in detail.

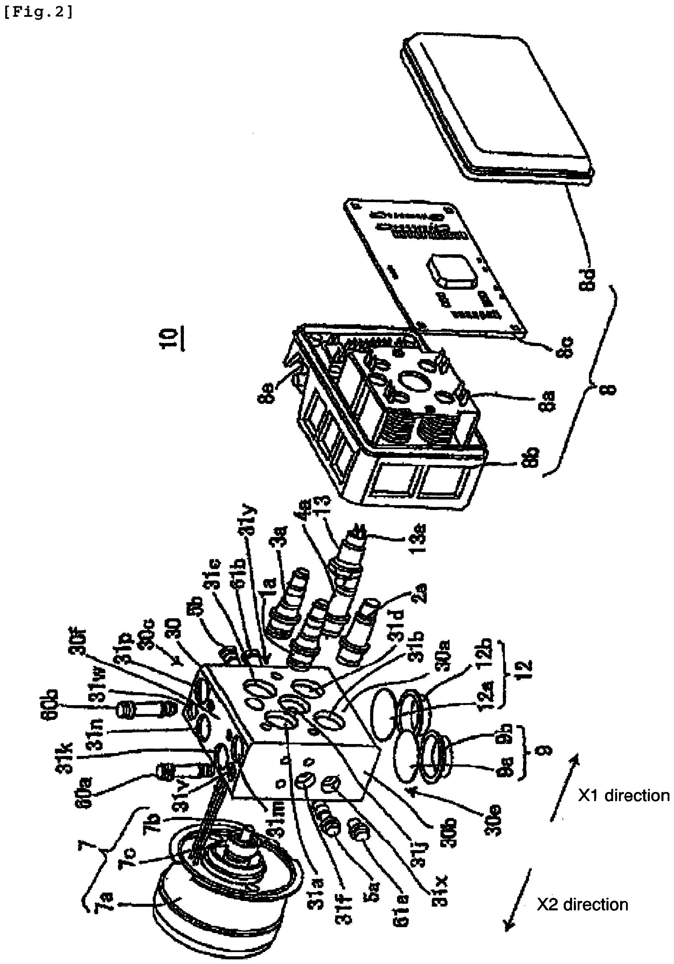

The hydraulic unit 10 includes a front-wheel-use EV solenoid valve 1, a front-wheel-use AV solenoid valve 2, a rear-wheel-use EV solenoid valve 3, a rear-wheel-use AV solenoid valve 4, a front-wheel-use pump 5, a rear-wheel-use pump 6, a motor 7, and an ECU 8 which is an electronic control unit (see Fig. 2).

The front-wheel-use EV, AV solenoid valves 1, 2 and the rear-wheel-use EV, AV solenoid valves 3, 4 are formed of a well-known 2-position type solenoid valve respectively. In a normal state, that is, in a state where the anti-lock brake control is not performed, the front-wheel-use EV solenoid valve 1 and the rear-wheel-use EV solenoid valve 3 assume an open state, and the front-wheel-use AV solenoid valve 2 and the rear-wheel-use AV solenoid valve 4 assume a closed state. The front-wheel-use pump 5 and the rear-wheel-use pump 6 are driven by the motor 7. The solenoid valves 1, 2, 3, 4 and the motor 7 are connected to the ECU 8 respectively, and the drive control of the solenoid valves 1, 2, 3, 4 and the motor 7 is performed in response to control signals transmitted from the ECU 8.

The hydraulic unit 10 includes a front-wheel-use flow passage 11 through which a braking liquid supplied to the front-wheel-use wheel cylinder 103 from the front-wheel-use master cylinder 101 flows, and a rear-wheel-use flow passage 21 through which a braking liquid supplied to the rear-wheel-use wheel cylinder 106 from the rear-wheel-use master cylinder 104 flows.

In the front-wheel-use flow passage 11, one end side of a first flow passage 11a is connected to the second pipe 108, and the other end side of the first flow passage 11a is connected to the front-wheel-use EV solenoid valve 1. One end side of a second flow passage 11b is connected to the front-wheel-use EV solenoid valve 1, and the other end side of the second flow passage 11b is connected to the third pipe 109. One end side of a third flow passage 11c is connected to the first flow passage 11a, and the other end side of the third flow passage 11c is connected to a discharge side of the front-wheel-use pump 5. One end side of a fourth flow passage 11d is connected to an intake side of the front-wheel-use pump 5, and the other end side of the fourth flow passage 11d is connected to the front-wheel-use AV solenoid valve 2. The front-wheel-use pump 5 makes the braking liquid flow into a third flow passage 11c side from a fourth flow passage 11d side, that is, into a front-wheel-use master cylinder 101 side from a front-wheel-use wheel cylinder 103 side. An accumulator 9 which decreases a pressure of the braking liquid is connected to the fourth flow passage 11d. One end side of a fifth flow passage 11e is connected to the second flow passage 11b, and the other end of the fifth flow passage 11e is connected to the front-wheel-use AV solenoid valve 2. The second flow passage 11b is provided with a pressure sensor 13 which detects a pressure of a braking liquid supplied to the front-wheel-use wheel cylinder 103.

On the other hand, in the rear-wheel-use flow passage 21, in the substantially same manner as the above-described front-wheel-use flow passage 11, one end side of a first flow passage 21a is connected to the second pipe 113, the other end side of the first flow passage 21a is connected to the rear-wheel-use EV solenoid valve 3. One end side of a second flow passage 21b is connected to the rear-wheel-use EV solenoid valve 3, and the other end side of the second flow passage 21b is connected to the third pipe 114. One end of a third flow passage 21c is connected to the first flow passage 21a, and the other end of the third flow passage 21c is connected to a discharge side of the rear-wheel-use pump 6. One end side of a fourth flow passage 21d is connected to an intake side of the rear-wheel-use pump 6, and the other end side of the fourth flow passage 21d is connected to the rear-wheel-use AV solenoid valve 4. The rear-wheel-use pump 6 makes a braking liquid flow into a third flow passage 21c side from a fourth flow passage 21d side, that is, into a rear-wheel-use master cylinder 104 side from a rear-wheel-use wheel cylinder 106. An accumulator 12 which reduces a pressure of the braking liquid is connected to the fourth flow passage 21d. One end of a fifth flow passage 21e is connected to the second flow passage 21b, and the other end of the fifth flow passage 21e is connected to the rear-wheel-use AV solenoid valve 4.

Here, a check valve is provided to the front-wheel-use and rear-wheel-use EV solenoid valves 1, 3 respectively in parallel to the solenoid valves 1, 3, and a throttle valve is provided to a discharge side of the front-wheel-use and rear-wheel-use pumps 5, 6 respectively. Further, a filter not shown in the drawing is arranged in front of and behind the front-wheel-use and rear-wheel-use EV solenoid valves 1, 3 in such a manner that one filter is provided on each side. A filter not shown in the drawing is arranged in front of the front-wheel-use and rear-wheel-use pumps 5, 6 in such a manner that one filter is provided on each side. A filter not shown in the drawing is arranged in front of the front-wheel-use and rear-wheel-use AV solenoid valves 2, 4 in such a manner that one filter is provided on each side.

Fig. 2 is an exploded perspective view showing the constitution of the hydraulic unit.

The hydraulic unit 10 includes a housing 30, first to fourth switching valve bodies 1a, 2a, 3a, 4a, the pressure sensor 13 which detects a braking liquid pressure, a pair of pistons 5a, 5b which pressurizes a braking liquid, the ECU 8 which performs the drive control of the first to fourth switching valve bodies 1a, 2a, 3a, 4a, the motor 7 which drives the pistons 5a, 5b, and the pair of accumulators 9, 12 which reduces a braking liquid pressure.

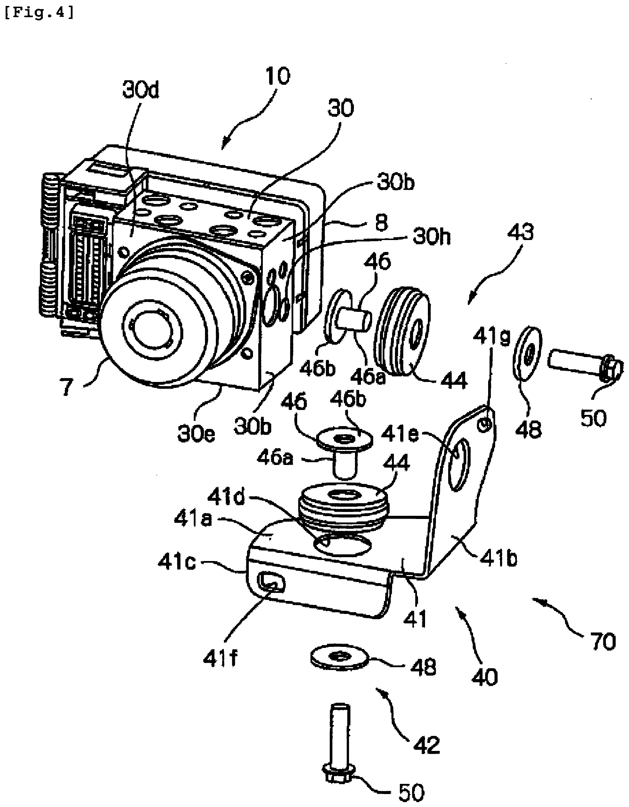

The housing 30 is made of metal such as aluminum, for example, and is formed of an approximately rectangular parallelepiped block. The housing 30 has an ECU mounting surface 30a, a side surface (third surface) 30b, a side surface 30c, a motor mounting surface (first surface) 30d which is formed on a surface on a side opposite to the ECU mounting surface 30a (see Fig. 4), a lower surface (second surface) 30e, and an upper surface 30f. The ECU mounting surface 30a and the motor mounting surface 30d are formed into an approximately square shape.

Further, in the inside of the housing 30, a flow passage which is constituted of the front-wheel-use flow passage 11 and the rear-wheel-use flow passage 21 described above is formed. In the surfaces ranging from the ECU mounting surface 30a to upper surface 30f, plural mounting holes 31a to 31p which are respectively communicated with the front-wheel-use flow passage 11 and the rear-wheel-use flow passage 21 are formed. In the respective mounting holes 31a to 31d, the first to fourth switching valve bodies 1a, 2a, 3a, 4a are inserted and mounted respectively.

The ECU 8 includes a coil unit 8a, an ECU housing 8b, an electronic printed circuit board (PCB) 8c which performs a drive control of the coil unit 8a, and an ECU cover 8d which covers the electronic printed circuit board 8c. The ECU 8 is mounted on the housing 30 such that the ECU 8 covers the ECU mounting surface 30a. On one side (for example, on a side-surface-30c side of the housing 30) of the ECU housing 8b, a connector 8e for connecting the ECU housing 8b to the electronic printed circuit board 8c is mounted. On the electronic printed circuit board 8c, a microcomputer is mainly mounted.

The coil unit 8a incorporates four coils for driving the first to fourth switching valve bodies 1a, 2a, 3a, 4a therein. The respective coils are arranged at positions corresponding to the first to fourth switching valve bodies 1a, 2a, 3a, 4a respectively. One end of each one of first to fourth switching valve bodies 1a, 2a, 3a, 4a is inserted into the inside of the corresponding coil, and the driving of the first to fourth switching valve bodies 1a, 2a, 3a, 4a is controlled by the respective coils. For example, the ECU 8 can perform the drive control of the first, the second, the third or the fourth switching valve body 1a, 2a, 3a, 4a in the X1 direction in the drawing or in the X2 direction in the drawing by energizing the coil corresponding to the switching valve body. Due to such an operation, the driving of the first to fourth switching valve bodies 1a, 2a, 3a, 4a is controlled by the coil unit 8a so that the front-wheel-use flow passage 11 and the rear-wheel-use flow passage 21 can be changed over between a communicable state and a shut-off state.

The ECU 8 can perform an anti-lock brake control by performing a drive control of the first to fourth switching valve bodies 1a, 2a, 3a, 4a based on rotational speeds of a front wheel and a rear wheel detected by wheel speed sensors (not shown in the drawing) and a pressure of a braking liquid detected by the pressure sensor 13, for example.

The front-wheel-use EV solenoid valve 1 (see Fig. 1) is constituted of the first switching valve body 1a and the coil unit 8a, and the front-wheel-use AV solenoid valve 2 (see Fig. 1) is constituted of the second switching valve body 2a and the coil unit 8a. The rear-wheel-use EV solenoid valve 3 (see Fig. 1) is constituted of the third switching valve body 3a and the coil unit 8a, and the rear-wheel-use AV solenoid valve 4 (see Fig. 1) is constituted of the fourth switching valve body 4a and the coil unit 8a.

The pressure sensor 13 detects a pressure of a braking liquid which is supplied to the front-wheel-use master cylinder 103 (see Fig. 1), for example. One end side of the pressure sensor 13 is inserted into a mounting holes 31j formed in the housing 30 at the approximately center of an area surrounded by mounting holes 31a to 31d for mounting the first to fourth switching valve bodies 1a, 2a, 3a, 4a. A connection part 13a formed on the other end side of the pressure sensor 13 is connected to the electronic printed circuit board 8c of the ECU 8. Here, the center of the area surrounded by the mounting holes 31a to 31d approximately agrees with the center of the ECU mounting surface 30a. That is, the mounting holes 31a to 31d for mounting the first to fourth switching valve bodies 1a, 2a, 3a, 4a form an approximately square shape on the ECU mounting surface 30a, for example, and an intersection of diagonal lines of the approximately square shape agrees with the above-mentioned center.

As described above, the pressure sensor 13 is arranged on the approximate center of the ECU mounting surface 30a of the housing 30, the ECU 8 is mounted on the ECU mounting surface 30a, and the connection part 13a of the pressure sensor 13 and the ECU 8 are connected to each other. Due to such a constitution, the pressure sensor 13 and the ECU 8 are favorably connected to each other.

The pair of pistons 5a, 5b is inserted into the mounting holes 31e, 31f formed in the side surfaces 30b, 30c respectively, and is movable in the direction toward the center of the housing 30. Further, the respective pistons 5a, 5b reciprocate in the direction toward the center thus pressurizing a braking liquid.

The motor 7 includes a motor body 7a, a drive shaft 7b which is joined to the motor body 7a and is rotatably driven, and an eccentric cam 7c which is connected to the drive shaft 7b. The motor body 7a is mounted on the motor mounting surface 30d of the housing 30. The drive shaft 7b and the eccentric cam 7c are rotatably inserted into a mounting hole not shown in the drawing which is formed in the motor mounting surface 30d of the housing 30.

The pair of pistons 5a, 5b is pushed in the direction toward the center of the housing 30 by spring members or the like, and distal end portions of the pair of pistons 5a, 5b are brought into contact with an outer peripheral surface of the eccentric cam 7c of the motor 7. Accordingly, a so-called plunger-type pump where the pair of pistons 5a, 5b performs the reciprocating motion when the eccentric cam 7c of the motor 7 is rotatably driven is provided. Here, the front-wheel-use pump 5 (see Fig. 1) and the rear-wheel-use pump 6 (see Fig. 1) are constituted of the pair of pistons 5a, 5b, the eccentric cam 7c of the motor 7 and the like respectively.

The pair of accumulators 9, 12 includes a body 9a, 12a and a cover 9b, 12b respectively, and is configured to temporarily store a braking liquid therein.

A pair of pumps 60a, 60b is mounted in the mounting holes 31v, 31w formed in the upper surface 30f of the housing 30 respectively, and a pair of pumps 61a, 61b is mounted in mounting holes 31x, 31y formed in the side surfaces 30b, 30c.

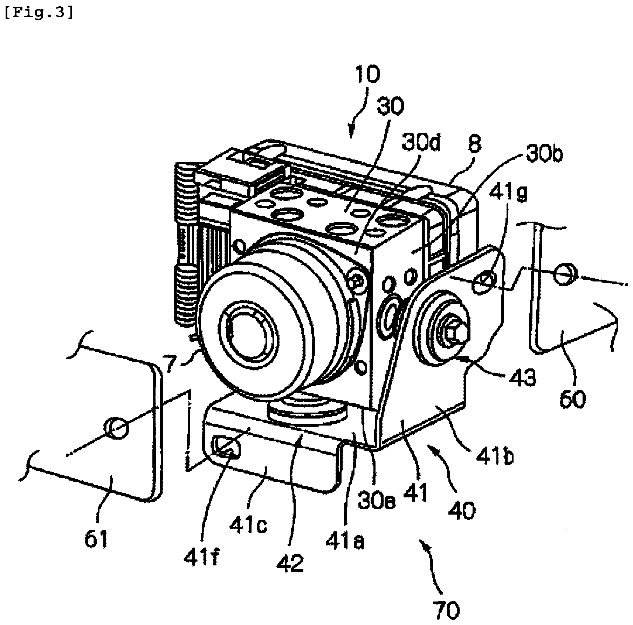

Fig. 3 is a perspective view showing the braking liquid pressure control device according to this embodiment. Fig. 4 is an exploded perspective view showing the braking liquid pressure control device. Fig. 5 is a perspective view showing the bracket.

A braking liquid pressure control device 70 includes, as shown in Fig. 3, a hydraulic unit support structure 40 which is constituted of a bracket 41, a first support part 42 and a second support part 43. The hydraulic unit 10 is mounted on the hydraulic unit support structure 40, and is mounted on a vehicle body by way of the hydraulic unit support structure 40. The first support part 42 and the second support part 43 are mounted on the bracket 41. The first support part 42 supports the lower surface 30e of the hydraulic unit 10 which is approximately perpendicular to the motor mounting surface 30d of the hydraulic unit 10. On the other hand, the second support part 43 supports the side surface 30b of the hydraulic unit 10 which is approximately perpendicular to the motor mounting surface 30d and the lower surface 30e of the hydraulic unit 10 respectively.

As shown in Fig. 4, the bracket 41 includes a first plate part 41a which is formed into a plate shape and faces the lower surface 30e of the hydraulic unit 10 in an opposed manner in a state where the hydraulic unit 10 is mounted on the bracket 41. In the approximately center of the first plate part 41a, a first hole part 41d for mounting the first support part 42 by assembling is formed in a state where the first hole part 41d penetrates the first plate part 41a in the thickness direction of the first plate part 41a. The first hole part 41d is formed at a position where an axis of the first hole part 41d passes an area in the vicinity of the center of gravity of the hydraulic unit 10 when the hydraulic unit 10 is mounted on the bracket 41. That is, the first support part 42 supports the hydraulic unit 10 in the vicinity of an area directly below the center of gravity of the hydraulic unit 10.

Further, a second hole part 41e for mounting the second support part 43 by assembling is formed in an end portion of the second plate part 41b of the bracket 41 on a side away from the first plate part 41a in a state where the second hole part 41e penetrates the second plate part 41b in the thickness direction of the second plate part 41b. The second hole part 41e is formed at a position where an axis of the second hole part 41e passes an area in the vicinity of the center of gravity of the hydraulic unit 10 in a state where the hydraulic unit 10 is mounted on the bracket 41. That is, the second support part 43 supports the hydraulic unit 10 in the vicinity of an area on a horizontal line which passes the center of gravity of the hydraulic unit 10.

Also a first fixing hole 41g (first fixing part) for fixing the bracket to the vehicle body is formed in an end portion of the second plate part 41b on a side away from the first plate part 41a in a state where the first fixing hole 41g penetrates the second plate part 41b in the thickness direction of the second plate part 41b. Due to such a constitution, the second plate part 41b of the bracket 41 of the hydraulic unit support structure 40 is fixed to a vehicle-body-side fixing bracket 60 (see Fig. 3) mounted on the vehicle body using bolts or the like whereby the braking liquid pressure control device 70 is mounted on the vehicle body.

On the other hand, a third plate part 41c which is bent approximately vertically toward a side away from the motor 7 is formed on one end side of the first plate part 41a of the bracket 41 at a motor-mounting-surface-30d side position with respect to the first support part 42 when the hydraulic unit 10 is mounted on the bracket 41. A second fixing hole 41f (second fixing part) for fixing the bracket 41 to the vehicle body is formed in the third plate part 41c at a position in the vicinity of an end portion of the third plate part 41c on a side away from the second plate part 41b in a state where the second fixing hole 41f penetrates the third plate part 41c in the thickness direction of the third plate part 41c. Due to such a constitution, the third plate part 41c of the bracket 41 of the hydraulic unit support structure 40 is fixed to a vehicle body fixing bracket 61 (see Fig. 3) mounted on the vehicle body using bolts or the like whereby the braking liquid pressure control device 70 is mounted on the vehicle body. The second fixing hole 41f is positioned more away from the second plate part 41b than the first support part 42, and the first fixing hole 41g is positioned more away from the third plate part 41c than the second support part 43.

In this embodiment, as shown in Fig. 5, the first fixing hole 41g, the second fixing hole 41f and the center of gravity G of the hydraulic unit 10 are positioned substantially on one straight line. That is, the center of gravity G of the hydraulic unit 10 is positioned on an imaginary line L which connects an arbitrary position within the first fixing hole 41g and an arbitrary position within the second fixing hole 41f.

As shown in Fig. 4, the first support part 42 and the second support part 43 include a mount rubber 44, a collar 46, a washer 48 and a bolt 50 respectively.

The mount rubber 44 is a vibration absorbing member having elasticity, and is formed of a cylindrical-shaped rubber-made material whose approximately center portion in the axial direction is necked. The mount rubber 44 is formed such that an outer diameter of the necked portion is set substantially equal to an inner diameter of the first hole part 41d and the second hole part 41e of the bracket 41. Due to such a constitution, when the mount rubber 44 is assembled into the first hole part 41d or the second hole part 41e of the bracket 41, the mount rubber 44 is fixed to the bracket 41 such that both sides of the necked portion sandwich the first plate part 41a or the second plate part 41b from both sides. Outer diameters of side portions of the mount rubber 44 arranged at both sides of the necked portion which forms a boundary between the side portions differ from each other, and the mount rubber 44 is assembled into the bracket 41 such that the side portion which has the larger outer diameter forms a hydraulic unit 10 side when the hydraulic unit 10 is mounted on the hydraulic unit support structure 40.

As shown in Fig. 4, the collar 46 is an integral body formed of a collar part 46a and a seat surface part 46b. However, the collar part 46a and the seat surface part 46b may be formed as members separate from each other.

The collar part 46a is formed into a circular columnar shape, has an outer diameter approximately equal to an inner diameter of the mount rubber 44, and also has a length in the axial direction which is approximately equal to a length of an inner peripheral surface of the mount rubber 44 in the axial direction. Due to such a constitution, the collar part 46a is fitted into the mount rubber 44 with substantially no gap formed therebetween.

The seat surface part 46b is formed with a diameter approximately equal to an outer diameter of the whole mount rubber 44, and is mounted on one end of the collar part 46a. Due to such a constitution, in a state where the collar 46 is assembled into the hydraulic unit support structure 40, the seat surface part 46b is brought into contact with the approximately whole surface of an end surface of the mount rubber 44 with a large contact area. On the other hand, the seat surface part 46b is configured such that when the hydraulic unit 10 is mounted on the hydraulic unit support structure 40, a surface of the seat surface part 46b on a side opposite to a surface which is brought into contact with the mount rubber 44 is brought into face contact with the lower surface 30e or the side surface 30b of the hydraulic unit 10 with a large contact area.

An outer diameter of the washer 48 is set approximately equal to an outer diameter of the whole mount rubber 44, and an inner diameter of the washer 48 is set approximately equal to a diameter of the bolt 50.

The bolt 50 is formed such that a threaded part of the bolt 50 penetrates the washer 48 and the collar 46 and a head part of the bolt 50 does not penetrate the washer 48. In mounting the hydraulic unit 10 on the hydraulic unit support structure 40, the bolt 50 sequentially penetrates the washer 48 and the collar 46 and is threadedly engaged with the threaded hole 30g, 30h which is formed in the lower surface 30e or in the side surface 30b of the hydraulic unit 10 and hence, the hydraulic unit 10 is fixed to the hydraulic unit support structure 40 by threaded engagement. Here, as shown in Fig. 4, the bolt 50 is threadedly engaged with the hydraulic unit 10 in the direction approximately perpendicular to an axis of the drive shaft 7b of the motor 7 (see Fig. 2). That is, when the hydraulic unit 10 is mounted on the hydraulic unit support structure 40, the lower surface 30e and the side surface 30b are fixed to the collars 46, the washers 48 and the bolt 50 so that the hydraulic unit 10 is supported on the bracket 41 by way of the mount rubber 44 having elasticity. Here, the first support part 42 supports the hydraulic unit 10 at a position where a line which passes the center of gravity of the hydraulic unit 10 and the lower surface 30e become orthogonal to each other. Due to such a constitution, when the hydraulic unit support structure 40 supports the hydraulic unit 10 in a state where the first plate part 41a of the bracket 41 assumes a horizontal posture, a contact surface where the seat surface part 46b of the collar 46 and the lower surface 30e of the hydraulic unit 10 are brought into contact with each other is positioned directly below the center of gravity of the hydraulic unit 10. On the other hand, the second support part 43 is configured such that, when the hydraulic unit 10 is mounted on the bracket 41, a horizontal line which passes the center of gravity of the hydraulic unit 10 is positioned within a contact surface where a planar portion of the side surface 30b of the hydraulic unit 10 and the mount rubber 44 are brought into contact with each other. Due to such a constitution, when the hydraulic unit support structure 40 supports the hydraulic unit 10 in a state where the first plate part 41a of the bracket 41 assumes a horizontal posture, the second support part 43 supports the hydraulic unit 10 in the vicinity of an area on a horizontal line which passes the center of gravity of the hydraulic unit 10.

In this embodiment, the braking liquid pressure control device 70 includes the first support part 42 which supports the lower surface 30e formed approximately perpendicular to the motor mounting surface 30d of the hydraulic unit 10, the second support part 43 which supports the side surface 30b formed approximately perpendicular to the motor mounting surface 30d and the lower surface 30e respectively, and the bracket 41 on which the first support part 42 and the second support part 43 are mounted and which has the first fixing hole 41g formed in the second plate part 41b and the second fixing hole 41f formed in the third plate part 41c, wherein the first fixing hole 41g, the second fixing hole 41f and the center of gravity of the hydraulic unit 10 are positioned approximately on one straight line. Due to such a constitution, the braking liquid pressure control device 70 can firmly support the hydraulic unit 10 only by two support parts 42, 43 and, at the same time, can firmly fix the bracket 41 to the vehicle-body-side fixing brackets 60, 61. Accordingly, the braking liquid pressure control device 70 can decrease the number of places where the hydraulic unit 10 is supported on the vehicle body and can suppress undesired vibrations.

Although the present invention has been explained in conjunction with the embodiment heretofore, the present invention is not limited to the embodiment. In the embodiment, the third plate part 41c is bent approximately perpendicular to the first plate part 41a. However, the third plate part 41c is not limited to such a constitution, and may be bent obliquely with respect to the first plate part 41a.

Further, in the above-mentioned embodiment, the first fixing part and the second fixing part of the bracket 41 are formed of the through hole. However, the present invention is not limited to such a constitution, and other structures such as projections may be adopted provided that the bracket of the braking liquid pressure control device can be fixed to the vehicle body.

### Reference Signs List

7: motor
7a: motor body
7b: drive shaft
7c: eccentric cam
8: ECU
10: braking liquid pressure control device (hydraulic unit)
30: housing
30a: ECU mounting surface
30b: side surface (third surface)
30c side surface
30d: motor mounting surface (first surface)
30e: lower surface (second surface)
30f: upper surface
30g: threaded hole
30h: threaded hole
40: hydraulic unit support structure
41: bracket
41a: first plate part
41b: second plate part
41c: third plate part
41d: first hole part
41e: second hole part
41f: first fixing hole (second fixing part)
41g: second fixing hole (first fixing part)
42: first support part
43: second support part
44: mount rubber
44a: necked portion
44b: flange part
44c: head part
46: collar
46a: collar part
46b: seat surface part
47: collar
48: washer
50: bolt
60: vehicle-body-side fixing bracket
61: vehicle-body-side fixing bracket
70: braking liquid pressure control device
100: brake-use hydraulic circuit
111: front-wheel-use disc brake device (braking part)
116: rear-wheel-use disc brake device (braking part)

## Claims

1. A braking liquid pressure control device (70) which includes a hydraulic unit (10) where a motor (7) is mounted on a first surface (30d) of the hydraulic unit (10) and an antilock brake control is performed by controlling a liquid pressure of a braking liquid supplied to a braking part (111, 116), the braking liquid pressure control device (70) being mounted on a vehicle body (60,61), wherein the braking liquid pressure control device (70) comprises:
a first support part (42) which supports a second surface (30e) formed approximately perpendicular to the first surface (30d) of the hydraulic unit (10);
a second support part (43) which supports a third surface (30b) formed approximately perpendicular to the first surface (30d) and the second surface (30e) of the hydraulic unit (10) respectively, and
a bracket (41) on which the first support part (42) and the second support part (43) are mounted, wherein
the bracket (41) includes a first plate part (41a) on which the first support part (42) is mounted, a second plate part (41b) which is formed approximately perpendicular to the first plate part (41a) and a third plate part (41c) which is formed by bending with respect to the first plate part (41 a) and has a first fixing part(41f) for fixing the bracket (41) to the vehicle body (61) **characterized in that** the second plate part (41b) has a second fixing part (41g) for fixing the bracket (41) to the vehicle body (60) and on which the second support part (43) is mounted, and **in that**
the second fixing part (41 g), the first fixing part (41 f) and the center of gravity (G) of the hydraulic unit (10) are positioned approximately on one straight line (L).

2. The braking liquid pressure control device (70) according to claim 1, wherein the second fixing part (41g) is positioned more away from the third plate part (41c) than the second support part (43).

3. The braking liquid pressure control device (70) according to claim 1 or 2, wherein the first fixing part (41f) is positioned more away from the first plate part (41b) than the first support part (42).

4. The braking liquid pressure control device (70) according to any one of claims 1 to 3 , wherein at least one of the second fixing part (41g) and the first fixing part (41 f) is a through hole.

5. The braking liquid pressure control device (70) according to any one of claims 1 to 4, wherein the third plate part (41 c) is formed by bending approximately perpendicular to the first plate part (41 a).

6. The braking liquid pressure control device (70) according to any one of claims 1 to 5, wherein the first support part (42) supports the hydraulic unit (10) at a position where a line which passes the center of gravity (G) of the hydraulic unit (10) and the second surface (30e) become approximately perpendicular to each other in a state where the hydraulic unit (10) is mounted on the vehicle body.

7. The braking liquid pressure control device (70) according to any one of claims 1 to 6 , wherein the first support part (42) supports the hydraulic unit (10) in the vicinity of an area directly below the center of gravity (G) of the hydraulic unit (10) in a state where the hydraulic unit (10) is mounted on the vehicle body.

8. The braking liquid pressure control device (70) according to any one of claims 1 to 7 , wherein the second support part (43) supports the hydraulic unit (10) in the vicinity of an area on a horizontal line which passes the center of gravity (G) of the hydraulic unit (10) in a state where the hydraulic unit (10) is mounted on the vehicle body.

## Patentansprüche

1. Bremsflüssigkeitsdrucksteuervorrichtung (70), die eine hydraulische Einheit (10) enthält, wobei ein Motor (7) auf einer ersten Oberfläche (30d) der hydraulischen Einheit (10) montiert ist und wobei durch Steuern eines Flüssigkeitsdrucks einer Bremsflüssigkeit, der auf ein Bremsorgan (111, 116) ausgeübt wird, eine Antiblockierbremssteuerung durchgeführt wird, wobei die Bremsflüssigkeitsdrucksteuervorrichtung (70) an einer Fahrzeugkarosserie (60, 61) montiert ist, wobei die Bremsflüssigkeitsdrucksteuervorrichtung (70) Folgendes umfasst:
ein erstes Trägerteil (42), das eine zweite Oberfläche (30e), die annährend senkrecht zu der ersten Oberfläche (30d) der hydraulischen Einheit (10) gebildet ist, trägt;
ein zweites Trägerteil (43), das eine dritte Oberfläche (30b), die annährend senkrecht zu der ersten Oberfläche (30d) bzw. der zweiten Oberfläche (30e) der hydraulischen Einheit (10) gebildet ist, trägt, und
eine Halterung (41), auf der das erste Trägerteil (42) und das zweite Trägerteil (43) montiert sind, wobei
die Halterung (41) einen ersten Plattenabschnitt (41a), auf dem das erste Trägerteil (42) montiert ist, einen zweiten Plattenabschnitt (41b), der annährend senkrecht zu dem ersten Plattenabschnitt (41a) gebildet ist, und einen dritten Plattenabschnitt (41c) enthält, der durch Biegen bezüglich des ersten Plattenabschnitts (41a) gebildet ist und ein erstes Befestigungsteil (41f) aufweist, um die Halterung (41) an der Fahrzeugkarosserie (61) zu befestigen,
**dadurch gekennzeichnet, dass** der zweite Plattenabschnitt (41b) ein zweites Befestigungsteil (41g) aufweist, um die Halterung (41) an der Fahrzeugkarosserie (60) zu befestigen, und auf dem das zweite Trägerteil (43) montiert ist, und dass
das zweite Befestigungsteil (41g), das erste Befestigungsteil (41f) und der Schwerpunkt (G) der hydraulischen Einheit (10) annährend auf einer geraden Linie (L) positioniert sind.

2. Bremsflüssigkeitsdrucksteuervorrichtung (70) nach Anspruch 1, wobei das zweite Befestigungsteil (41g) weiter von dem dritten Plattenabschnitt (41c) entfernt positioniert ist als das zweite Trägerteil (43).

3. Bremsflüssigkeitsdrucksteuervorrichtung (70) nach Anspruch 1 oder 2, wobei das erste Befestigungsteil (41f) weiter von dem ersten Plattenabschnitt (41b) entfernt positioniert ist als das erste Trägerteil (42).

4. Bremsflüssigkeitsdrucksteuervorrichtung (70) nach einem der Ansprüche 1 bis 3, wobei das zweite Befestigungsteil (41g) und/oder das erste Befestigungsteil (41f) einem Durchgangsloch entspricht.

5. Bremsflüssigkeitsdrucksteuervorrichtung (70) nach einem der Ansprüche 1 bis 4, wobei der dritte Plattenabschnitt (41c) durch Biegen annähernd senkrecht zu dem ersten Plattenabschnitt (41a) gebildet ist.

6. Bremsflüssigkeitsdrucksteuervorrichtung (70) nach einem der Ansprüche 1 bis 5, wobei das erste Trägerteil (42) die hydraulische Einheit (10) in einem Zustand, in dem die hydraulische Einheit (10) auf der Fahrzeugkarosserie montiert ist, an einer Position trägt, an der eine Linie, die durch den Schwerpunkt (G) der hydraulischen Einheit (10) verläuft, und die zweite Oberfläche (30e) annährend senkrecht zu einander sind.

7. Bremsflüssigkeitsdrucksteuervorrichtung (70) nach einem der Ansprüche 1 bis 6, wobei das erste Trägerteil (42) die hydraulische Einheit (10) in einem Zustand, in dem die hydraulische Einheit (10) auf der Fahrzeugkarosserie montiert ist, in der Nähe eines Bereichs, der sich unmittelbar unterhalb des Schwerpunkts (G) der hydraulischen Einheit (10) befindet, trägt.

8. Bremsflüssigkeitsdrucksteuervorrichtung (70) nach einem der Ansprüche 1 bis 7, wobei das zweite Trägerteil (43) die hydraulische Einheit (10) in einem Zustand, in dem die hydraulische Einheit (10) an der Fahrzeugkarosserie montiert ist, in der Nähe eines Bereichs einer horizontalen Linie, die durch den Schwerpunkt (G) der hydraulischen Einheit (10) verläuft, trägt.

## Revendications

1. Dispositif de commande de la pression d'un liquide de frein (70) comprenant une unité hydraulique (10), un moteur (7), étant monté sur une première surface (30d) de cette unité hydraulique (10) et une commande de frein antiblocage étant effectuée en commandant la pression du liquide de frein fourni à une partie de freinage (111, 116), le dispositif de commande de la pression du liquide de frein (70) étant monté sur un corps de véhicule (60, 61),
ce dispositif de commande de la pression du liquide de frein (70) comprenant :
une première partie support (42) supportant une seconde surface (30e) essentiellement perpendiculaire à la première surface (30d) de l'unité hydraulique (10),
une seconde partie support (43) qui supporte une troisième surface (30b) essentiellement perpendiculaire à la première surface (30d) et à la seconde surface (30e) de l'unité hydraulique (10), respectivement, et
un support (41) sur lequel la première partie support (42) et la seconde partie support (43) sont montées,
ce support (41) comprenant une première partie plate (41a) sur laquelle est montée la première partie support (42), une seconde partie plate (41b) essentiellement perpendiculaire à la première partie plate (41a) et une troisième partie plate (41c) qui est formée par cintrage de la première partie plate (41a) et comprend une première partie de fixation (41f) pour permettre de fixer le support (41) au corps (61) du véhicule,
**caractérisé en ce que**
la seconde partie plate (41b) comporte une seconde partie de fixation (41g) permettant de fixer le support (41) au corps (60) du véhicule et sur laquelle la seconde partie support (43) est montée, et la seconde partie de fixation (41g), la première partie de fixation (41f) et le centre de gravité (G) de l'unité hydraulique (10) sont essentiellement alignés sur une droite (L).

2. Dispositif de commande d'un liquide de frein (70) conforme à la revendication 1,
dans lequel la seconde partie de fixation (41g) est plus éloignée de la troisième partie plate (41c) que la seconde partie support (43).

3. Dispositif de commande de la pression d'un liquide de frein (70) conforme à la revendication 1 ou 2,
dans lequel la première partie de fixation (41f) est plus éloignée de la première partie plate (41b) que la première partie support (42).

4. Dispositif de commande de la pression d'un liquide de frein (70) conforme à l'une quelconque des revendications 1 à 3,
dans lequel la seconde partie de fixation (41g) et/ou la première partie de fixation (41f) est (sont) constituée(s) par un trou traversant.

5. Dispositif de commande de la pression d'un liquide de frein (70) conforme à l'une quelconque des revendications 1 à 4,
dans lequel la troisième partie plate (41c) est formée par un cintrage essentiellement perpendiculaire à la première partie plate (41a).

6. Dispositif de commande de la pression d'un liquide de frein (70) conforme à l'une quelconque des revendications 1 à 5,
dans lequel la première partie support (42) supporte l'unité hydraulique (10) dans une position dans laquelle une droite passant par le centre de gravité (G) de l'unité hydraulique (10) et la seconde surface (30e) deviennent essentiellement perpendiculaires lorsque l'unité hydraulique (10) est montée sur le corps de véhicule.

7. Dispositif de commande de la pression d'un liquide de frein (70) conforme à l'une quelconque des revendications 1 à 6,
dans lequel la première partie support (42) supporte l'unité hydraulique (10) au voisinage d'une zone située directement au-dessous du centre de gravité (G) de l'unité hydraulique (10) lorsque l'unité hydraulique (10) est montée sur le corps de véhicule.

8. Dispositif de commande de la pression d'un liquide de frein (70) conforme à l'une quelconque des revendications 1 à 7, dans lequel la seconde partie support (43) supporte l'unité hydraulique (10) au voisinage d'une zone située sur une droite horizontale qui passe par le centre de gravité (G) de l'unité hydraulique (10) lorsque cette unité hydraulique (10) est montée sur le corps de véhicule.
